# EUROPEAN PATENT APPLICATION

(11) **EP 1 480 172 A1**
(43) Date of publication of application: **24.11.2004**
(21) Application number: 03405358.7
(22) Date of filing: 22.05.2003
(51) Int. Cl.: G07C 9/00

(54) **System for handling the flow of visitors or clients**

(71) Applicant: ABB Technology FLB AB, SE-113 96 Stockholm (SE)
(72) Inventor: Mallick, Vishal, 8105 Regensdorf (CH); Schu, Wolfgang, 5316 Leuggern-Gippingen (CH); Rüttimann, Bruno, 8405 Winterthur (CH)
(74) Representative: ABB Patent Attorneys

(57) **Abstract**

The present invention is concerned with a system for handling the flow of visitors or clients temporarily admitted to business premises. The costs arising in connection with the activities or consumption of resources by the visitor or client are forwarded to a "premises resources planning" or accounting system without any interaction of an additional person. To that purpose an accounting module or program (50) is connected via a communication link to various subsystems dedicated to services such as announcement (20) and reception (30) of the visitor. Further subsystems are concerned with access control (40), car parking management or conference room reservation (90). Preferably, a confirmation means is provided in order to avoid the billing of announced activities or ordered services which have not been completely consumed.

## Description

### FIELD OF THE INVENTION

The invention relates to the field of command and control systems for business premises housing a variety of business activities, such as office buildings, hotels, hospitals or conferencing centres. It relates in particular to the activities and the usage of services or resources in connection with a temporary physical displacement of people into or within said premises. It starts from a system for handling the flow of visitors or clients temporarily admitted to the business premises as described in the preamble of claim 1.

### BACKGROUND OF THE INVENTION

Large business premises are often conceived to permit an interaction between persons whose principal business activity takes place inside of the business premises and persons who physically displace themselves in order to participate in said business activity. By way of example, office buildings are occupied by managers inviting people whose place of work is outside of the building to participate in a meeting somewhere inside the building. Or the business premises comprise a hotel and the business activity involves hotel staff providing a hotel room, laundry services and meals to a traveler. Likewise, the business premises may comprise a hospital, clinic or sanatorium, and the resource-planning department orders patients from a waiting list to join the premises for a predictive therapeutic or rehabilitative treatment of limited duration. And a conferencing centre, either within a hotel or as an individual facility near an airport or a railway station, hosts groups of people gathering within the premises of the centre for a limit time interval, occasionally attended to by discrete service providers.

In the article "Industrial IT for performance buildings", ABB Review 2/2002, p.64-71 a so-called "people circulation solution" is described in the context of and for use in an office building. The circulation of people, i.e. occupants having a permanent place of work in the building as well as visitors temporarily passing by, defines the access control and security infrastructure. On the basis of an analysis of occupant and visitor building entry and exit processes, a solution was developed for tenants who require a regulated flow of people for security purposes and want to know, at any given instant, exactly who is in the building. In such cases, single entry systems have to be installed and only controlled access, i.e. via access badges, is allowed. The penalty is that all building users (both permanent occupants and temporary visitors) have to be registered and given access rights (badges).

The aforementioned "people circulation solution" comprises the following four subsystems or "applications":
1. A visitor announcement application that enables a host in the building to announce visitors to the other subsystems via an electronic agenda of the host person and/or standard desktop applications, such as Microsoft Outlook or Lotus Notes.
2. A virtual reception desk where a visitor can identify himself and receive an entry badge without the need for administrative help from a traditional receptionist.
3. An in-house voice communication medium used to link the virtual reception desk automatically to the corresponding host when the visitor arrives.
4. An access control application consisting of card readers, door controllers and an access control rights administration system. Fire and safety systems are configured to directly open the emergency exits as well as those exits controlled by the access control system.

The proposed solution integrates all of the above subsystems to fully automate the flow of occupants and visitors within a building while ensuring high-level security and safety. When arranging a meeting the host can organize the reception of visitors exactly as required. The visitor handling capacity is expanded, greater flexibility in operating the building is achieved and running costs, in particular outside of normal office hours are reduced. The subsystems are interconnected via an enterprise network linking the separate controllers or computers, and/or by software interface mechanisms and standards such as CORBA or SOAP, and communicating using a common (IP) protocol.

The European Patent Application EP-A 1296290 discloses an application for providing a visitor identification badge comprising a virtual reception desk or kiosk as mentioned above. The virtual reception desk or terminal device registers visitor information and, in accordance with an access status of the visitor, issues a visitor identification badge.

The access status of the visitor is determined, i.e. his access rights are confirmed, by establishing a voice and/or video communication link with a host person. To that purpose, an interface between the virtual reception desk and a telephony system can be realised e.g. by using JTAPI, which is a standard Java™ API (Application Program Interface) for telephone call control.

An access control and security application such as the abovementioned subsystem number 4 called "OnGuard Visitor" is offered e.g. by Lenel Systems International Inc. and described in detail in http://www.lenel.com/software/og evisitor.htm. It provides a web browser-based application that allows companies to manage and track visitors throughout their enterprise and even integrates additional features like intrusion detection.

In large business premises with considerable business activity involving a number of tenants or permanent occupants as in-house residents, shared services or resources such as HR, IT support including internet access, catering, security and room cleaning are jointly used by all the occupants who more or less permanently work on said premises. The consumption of said services can easily be monitored and/or the costs associated therewith are divided in a predetermined and balanced manner between the permanent occupants or their professional units or departments respectively.

However, things change if external partners as visitors or clients are involved on a sporadic or at least discontinuous basis. The abovementioned shared services as well as any other costs associated with the activity or consumption of resources caused by the external partners may not be divided in a predetermined manner between the in-house professional units without creating a source of imbalance. By way of example, a consultant operating a help line and never receiving any clients within the walls of their office building should not have to account for the cost associated with the reception of visitors. On the other hand, a physician having his medical practice in the same building and provoking a constant coming and going of people should have to contribute to the room cleaning costs to a much higher extent. Transparency is required not only if the in-house residents are not all in the same reporting structure, but also if costs are shared between the internal host and the external partner.

### DESCRIPTION OF THE INVENTION

It is an objective of the invention to allow for a simple allocation of costs generated in connection with a temporary admission of visitors or clients to business premises occupied by at least two distinct tenants or professional units sharing certain services related to their business activities and the business premises. It is a further objective to achieve cost transparency among these professional units. These objectives are achieved by a system for handling the flow of external partners temporarily admitted to business premises according to claim 1. Further preferred embodiments are evident from the dependent patent claims.

According to the invention, subsystems or devices dedicated to various shared services or tasks are configured to communicate accounting information related to the visitors or clients to an accounting subsystem. This allows the accounting or "premises resource planning" system to charge either the visitors/clients or the professional unit having invited the former to the business premises for costs related to a use of services or resources. Since said services are ordered and confirmed through an end-to-end integrated system for handling the flow of external partners, all the information required for billing is already available in machine-readable from and does not have to be entered again manually. Hence, delays and loss of information between different process steps are reduced and sources of error by human manipulation are eliminated.

In a preferred embodiment of the invention, a car parking management system is preferentially included as another subsystem reporting to the same "premises resource planning" means. This allows an occupant of the premises to offer a smooth arrival to the external visitors or clients, and enables a transparent resource, i.e. car parking space, usage monitoring and corresponding cost allocation.

In another preferred embodiment of the invention, it is distinguished between the services initially ordered and the quantity and quality of services actually consumed. This is useful if last-minute changes happen frequently or only partial consumption takes place. To that end, a confirmation means is provided and a confirmation is issued either by the temporary visitor or client or by a permanent occupant or employee representing the inviting professional unit.

In one variant of the invention, the business premises comprise an office building, and a conference room reservation application is added as a subsystem. In an alternative variant, the business premises comprise a hospital or a hotel, and a patient or hotel room reservation application constitutes another subsystem.

### BRIEF DESCRIPTION OF THE DRAWINGS

The subject matter of the invention will be explained in more detail in the following text with reference to preferred exemplary embodiments which are illustrated in the attached schematical drawings, in which:
Fig. 1 shows the basic components of a system according to the invention, and
Fig.2 shows some communication channels within single subsystems or interconnecting two distinct subsystems.

The reference symbols used in the drawings, and their meanings, are listed in summary form in the list of reference symbols. In principle, identical parts are provided with the same reference symbols in the figures.

### DETAILED DESCRIPTION OF PREFERRED EMBODIMENTS

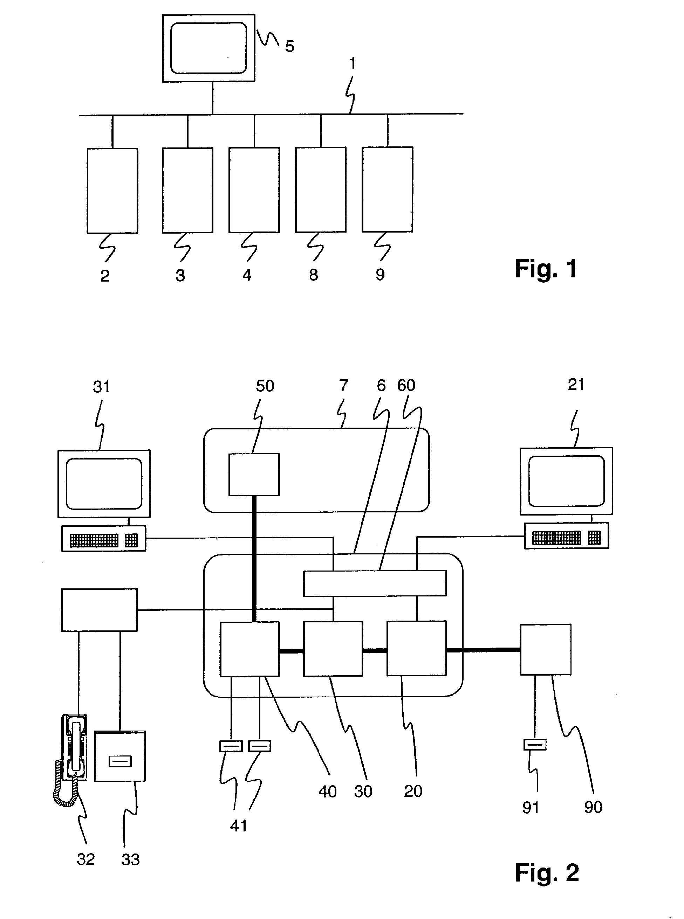

Fig. 1 depicts the structure of a system for handling the flow of external partners according to the invention. A communication link 1 represented by the horizontal line interconnects various basic subsystems, such as an announcement subsystem 2, a reception subsystem 3, an access control subsystem 4 and an accounting subsystem 5. The subsystems mentioned 2,3,4,5 need not be localised in one place but may themselves comprise several distributed data processing units and/or user interface devices. The announcement subsystem 2 for invitation and pre-registration of the visitors or clients e.g. may be a tool included on the PCs of every occupant of an office building or may be present only within the resource planning department of a clinic. The reception subsystem 3 may either be a virtual reception desk as mentioned above or be operated in a conventional way by a traditional receptionist. The access control subsystem 4 in turn is generally linked to badge or card readers distributed all over the premises and allowing to control the passage or determine the presence of a particular badge holder.

Further subsystems may be added, e.g. a car parking management subsystem 8 which guarantees that the arriving visitor or client will find an empty parking lot at the scheduled arrival time. Other technical support devices related to catering, transport reservation (train, taxi, flight) or accommodation of the visitor (hotel, room reservation, support) may be provided.

The accounting subsystem 5 receives all relevant information related to the activity of or consumption of resources by the visitor from the other subsystems 2,3,4,8. As all the subsystems are connected via the communication link 1, the provision of the relevant data can be fully automated and assigned to the subsystems without the necessity for a person to enter data into an enterprise resource planning (ERP) system.

The communications link 1 itself can be conceived as a multitude of dedicated communication channels and/or a wire-based or wireless local area network (LAN). The data communication between the various subsystems is implemented using existing or dedicated application program interfaces (APIs) or existing standards for interfacing computer applications, such as e.g. Microsoft™ .COM, .DCOM, the common object request broker architecture (CORBA), simple object access protocol (SOAP), Java™ Remote Method Invocation (RMI) or Skyva iDoc.

As a preferred example, an IT architectural view of an implementation of the system described above within an office building is shown in greater detail in Fig.2. The thick lines represent communication channels for the information exchange over the communication link between two subsystems. The thin lines represent communication channels within a single subsystem, e.g. between a user interface and a server running a corresponding program module. A centralized facility management server 6 or, alternatively, a number of distributed servers each including appropriate data processing means, host a multitude of computer program elements or program modules 20,30,40 associated with the various subsystems 2,3,4.

The announcement module 20 is connected to an announcement user interface 21 on the desktop PC of an occupant. The interface 21 being implemented preferably as a graphic user interface GUI, the management server 6 comprises a web-server 60 to generate display control data such as HTML or XML code that is transmitted to and displayed on the occupant's desktop PC which thus only requires a standard browser. The inviting occupant, when scheduling or announcing the next meeting to take place within the building, enters the relevant data concerning the external visitor and the planned arrival time into the announcement system 2 via the interface 21.

The reception module 30 is connected to a reception visitor interface 31, either at a conventional or a virtual visitor reception desk. The visitor interface 31 again comprises a graphic user interface GUI controlled via the web-server 60. The arrival and identity of the visitor is confirmed either by a traditional receptionist or the visitor himself. To that purpose, a visitor identification confirmation means or telephone 32 is part of the reception desk and allows a confirmation call with the hosting occupant, either via an analogue or ISDN telephone line, or a voice over IP or dedicated video channel. Upon confirmation by the host, which is preferably done by dialling a code on his phone, the traditional receptionist or an automated visitor identification badge dispenser 33 finally issues an identification means in the form of a badge to the visitor.

An access control module 40 is connected to badge readers 41 and associated door controllers dedicated to the access control of individual doors or entrances within the building. The module 40 receives information regarding access rights of a particular scheduled visitor from the announcement module 20.

Finally, an accounting server 7 assigned to the tenant or proprietor of the office building is provided and runs the resources planning / accounting application module 50. As mentioned above, all the aforementioned subsystems do forward relevant data related to the activity of the visitor to the server 7 via the link 1. By way of example, upon scheduling of a meeting with a visitor by the occupant or host, the corresponding data comprising the information "client name" and "one registration process completed" is forwarded to the accounting server 7. At the same time, an indication as to the cost center is entered into the system, i.e. if the hosting occupant or his professional unit respectively is to be charged, or if the costs are to be externalised. When the visitor arrives, the information given before is confirmed, such as to avoid billing a cost center in case the scheduled visitor is unable to participate in the meeting.

Service subsystems 9 related to activities in connection with meetings may comprise the reservation of a conference room or the ordering of meals. Again, the announced costs are only billed in full if and once they incur, i.e. if the conference room is actually occupied during the announced period of time or if all the meals ordered are actually consumed. To that purposes, further badge readers or other terminal displays 91 providing user interfaces are installed near the entrance of the conference room or the cashier of a restaurant/cafeteria and connected to a corresponding application module 90. The badge reader or terminal 91 requires a confirmation either by inserting the badge into the reader and/or by entering a personal identification number (PIN) into the terminal device. The PIN may be handed to the visitor upon arrival together with the badge.

### LIST OF DESIGNATIONS

- 1: communication link
- 2: announcement subsystem
- 20: announcement module
- 21: announcement host interface
- 3: reception subsystem
- 30: reception module
- 31: reception visitor interface
- 32: visitor identification confirmation means
- 33: visitor identification badge dispenser
- 4: access control subsystem
- 40: control module
- 41: badge reader
- 5: accounting subsystem
- 50: resources planning / accounting module
- 6: facility management server
- 60: web-server
- 7: accounting server
- 8: car parking management subsystem
- 9: service subsystem
- 90: service module
- 91: badge readers / terminal display

## Claims

1. A system for handling the flow of visitors or clients temporarily admitted to business premises occupied by at least two distinct professional units, comprising
- an announcement subsystem (2) for scheduling the admission and arrival of the visitor or client,
- a reception subsystem (3) for identifying the visitor or client upon arrival and providing an identification means;
- an access control subsystem (4) for granting predefined access rights to the visitor or client in accordance with his identification means;
- a communication link (1) for information exchange between the abovementioned subsystems (2,3,4),
**characterized in that** an accounting subsystem (5) is connected to the communication link (1) and capable of receiving, from the subsystems (2,3,4), accounting information related to the visitor or client, and of allocating said accounting information to one of the at least two professional units.

2. The system according to claim 1, **characterized in that** the reception subsystem (3) comprises a virtual reception desk with a reception visitor interface (31), visitor identification confirmation means (32) and a visitor identification badge dispenser (33).

3. The system according to claim 1, **characterized in that** a car parking management subsystem (8) is connected to the communication link (1).

4. The system according to claim 1 or 3, **characterized in that** the accounting information relates to a confirmed usage of the services provided by the subsystems (2,3,4,8).

5. The system according to one of claims 1 to 4, **characterized in that** the business premises comprise an office building and **in that** a conference room reservation subsystem (9) is connected to the communication link (1).

6. The system according to one of claims 1 to 4, **characterized in that** the business premises comprise a hotel or a hospital and **in that** a hotel room or a patient room reservation subsystem (9) is connected to the communication link (1).
